# EUROPÄISCHE PATENTSCHRIFT

(11) **EP 1 853 451 B1**
(45) Veröffentlichungstag und Bekanntmachung des Hinweises auf die Patenterteilung: **06.06.2012**
(21) Anmeldenummer: 06706772.8
(22) Anmeldetag: 09.02.2006
(51) Int. Cl.: B60J 10/00

(54) **DICHTUNGSPROFIL**
SEAL PROFILE
JOINT D'ETANCHEITE PROFILE

(30) Priorität: 18.02.2005 AT 26902005
(43) Veröffentlichungstag der Anmeldung: 14.11.2007
(73) Patentinhaber: Knorr-Bremse Gesellschaft mit beschränkter Haftung, 2340 Mödling (AT)
(72) Erfinder: KATZENSTEINER, Thomas, A-3334 Gaflenz (AT)
(74) Vertreter: Schönmann, Kurt
(86) Internationale Anmeldenummer: PCT/EP2006/001133
(87) Internationale Veröffentlichungsnummer: WO 2006/087131

(56) Entgegenhaltungen:
- EP-A- 1 111 633
- WO-A-03/097977
- DE-A1-102004 005 289
- DE-U1- 9 418 117
- US-A- 5 345 671
- US-A- 6 125 591
- US-A1- 2004 140 186

## Beschreibung

Die Erfindung betrifft Dichtungsprofile entsprechend dem Oberbegriff des Anspruches 1 und der WO 03/097977.

Diese Druckschrift offenbart in einer Ausbildung die Verwendung von jeweils zwei Dichtlippen pro Profil. Diese Dichtlippen gehen von der Außenkante der Stirn des Dichtungsprofils aus und ragen schräg nach innen, somit beim männlichen Profil zur Sensorkammer hin. Um diese im geschlossenen Zustand nicht zu beeinträchtigen, ist die Länge der Dichtlippen stark beschränkt, die Positionierung an der jeder mechanischen Beeinträchtigung besonders ausgesetzten Kante nachteilig.

Ein ähnliches Profil, bei dem die Sensorkammer selbst die Stirn bildet und die Dichtlippen daher praktisch zur Gänze vor der Sensorkammer liegen, ist aus der US 5,345,671 bekannt. Die Art des Sensors (ein Kondensator) macht es notwendig, dass in der Schließendlage des Türblattes nur eine geringe Deformation der Dichtlippen auftritt, die Dichtwirkung ist daher schwach, die Fehleranfälligkeit hoch.

Weitere, anders aufgebaute Profile sind z.B. aus der EP 1 288 420 A, der DE 196 422 21 A die der EP 835 781 A entspricht, dem DE 94 06 445 U und dem DE 298 08 292 U bekannt und erfüllen die bisher an sie gestellten Sicherheitsanforderungen im Allgemeinen zufrieden stellend.

Als Sicherheitsanforderung wird derzeit angesehen, dass die in Hohlräumen des Gummiprofils angebrachten Sensoren, zumeist handelt es sich um sogenannte Schaltleisten, doch sind auch andere Sensoren, beispielsweise Druckwächter, die auf das Komprimieren des im Hohlraum eingeschlossenen Gases reagieren bekannt, auch das Einklemmen dünner Gegenstände wie Spazierstöcke, Krücken, dünne Aktenmappen, einzelne Finger und sogar wie Hundeleinen und Kleidungsstücke erkennen. Um dies zu erreichen, wurden die Hohlräume, in denen die Sensoren angebracht sind, immer näher und näher an die Außenkontur des Querschnittes und, in Schließrichtung gesehen, näher und näher an die Stirn des Profils gebracht, um Zwischenglieder, deren Deformation ein Weiterleiten der Wirkung des Einklemmens verringert, möglichst zu vermeiden.

Die Folge dieser Maßnahmen ist nun, dass die Türdichtungen ihren ursprünglichen Zweck, nämlich die Türe abzudichten, zumindest im Bereich der Hauptschließkante, an der ja derartige Dichtungsprofile zumeist oder gar zwingend eingesetzt werden, nicht mehr zufriedenstellend erfüllt.

Es ist somit Aufgabe der Erfindung, eine Türdichtung, insbesondere für deren Hauptschließkante, anzugeben, die auch auf dünne eingeklemmte Gegenstände zuverlässig und mit hoher Sensibilität reagiert, gleichzeitig aber die Dichtwirkung derartiger Dichtung verbessert.

Erfindungsgemäß werden diese Ziele durch die im kennzeichnenden Teil des Anspruchs 1 angegebenen Merkmale erreicht.

Durch diese Ausbildung, zu der ein Gegenprofil mit im wesentlichen V-förmigen Querschnitt zumindest in seinem Stirnbereich gehört, ist sichergestellt, dass die Dichtlippe auch bei der für den Erhalt der Sensibilität der Sensorvorrichtung notwendigen Weichheit genügend stark deformiert wird, um im geschlossenen Zustand der Tür mit ausreichender Kraft am Gegenprofil anzuliegen und so für eine ausreichende Abdichtung zu sorgen. Durch diese im geschlossenen Zustand der Tür V-förmige Ausbildung des Dichtspaltes wird noch dazu die Sensibilität der Sensoranordnung deutlich verbessert, da eingeklemmte Gegenstände zwischen den äußeren Randbereichen des Dichtspaltes, in denen ja durch die Dichtlippe die tatsächliche Dichtung erfolgt, an die Sensorleiste (oder einen anderen Sensor) gedrückt werden, und so die zum Erkennen des eingeklemmten Zustands notwendigen Kräfte noch erhöhen.

Dazu kommt noch, dass in einer Ausgestaltung die Form und Tiefe des Gegenprofils im Bereich des Dichtspaltes so ausgebildet ist, dass im geschlossenen Zustand der Türe die Kammer für den Sensor im mittleren Bereich nahezu am Grund des V anliegt, während seitlich davon jeweils ein merkliches Volumen frei bleibt, sodass bei geschlossener Tür nicht nur zwei berührende Dichtflächen vorliegen, sondern dazwischen noch nach Art einer berührungsfreien Dichtung zwei Dichtkammem mit einer dazwischen angeordneten Drossel.

Die Erfindung wird im Folgenden anhand der Zeichnung näher erläutert. Dabei zeigt
die Fig. 1 den Zustand der Dichtungen bei geöffneter Tür und
die Fig. 2 bei geschlossener Tür.

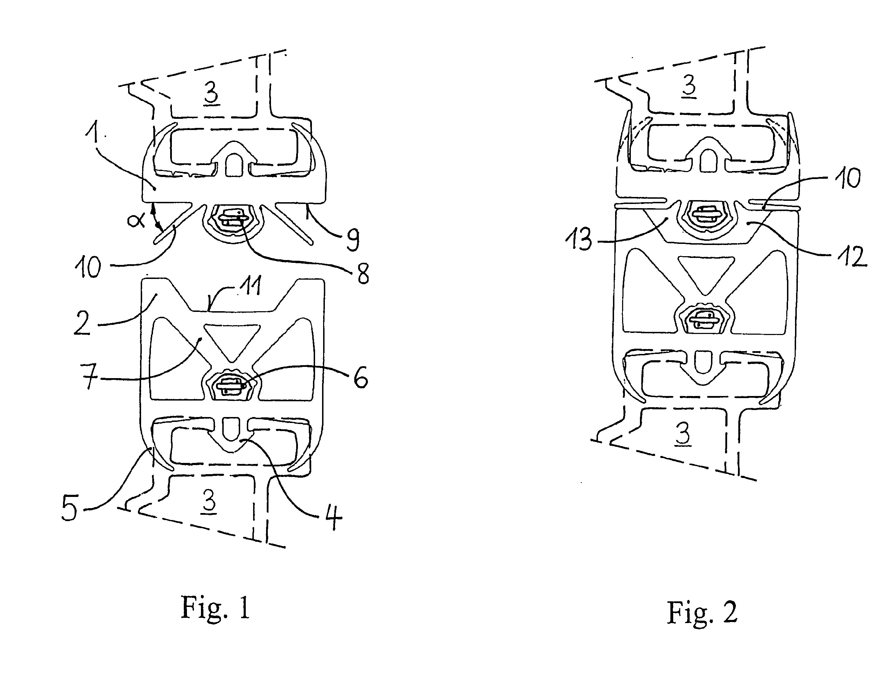

In Fig. 1 ist ein erfindungsgemäßes Paar zusammenwirkender Dichtungen in einem schematischen Querschnitt normal zur Längserstreckung der Dichtung dargestellt. Ein solches Paar von Dichtungen besteht aus einem männlichen Profil 1 und einem weiblichen Profil 2 mit im wesentlichen V-förmiger Stirnfläche. Beide Profile sind an Türblättern 3 passend befestigt, beispielsweise mittels Leisten 4, die pilzartigen Querschnitt aufweisen und mittels Dichtleisten 5, die durch das Türblatt elastisch aufgespreizt werden und so dicht am Türblattäußeren anliegen.

Im dargestellten Ausführungsbeispiel sind sowohl das männliche Profil 1 als auch das weibliche Profil 2 mit jeweils einer Kammer zur Aufnahme eines passenden Kollisionssensors versehen. Dabei kann bevorzugt die im weiblichen Profil 2 vorgesehene Kammer 6 mit einem Sensor ausgerüstet sein, der eine Kollision währen des Schließens der Türe, solange zwischen den beiden Profilen 1, 2 noch Platz genug ist um beispielsweise einen Arm, eine Aktentasche oder dergleichen hindurchzubringen, vorgesehen sein. Derartige Sensoren müssen nicht sehr sensibel sein, sollen aber auf das Einklemmen einer Gliedmaße oder eines Kindes zuverlässig reagieren, sodass es ausreicht, den Sensor in der Kammer 6 vorzusehen, wo er Stöße und Schläge nur durch Vermittlung der V-förmig ausgebildeten Profilstege 7 übertragen bekommt.

Anders ist es mit der erfindungsgemäß ausgebildeten Kammer 8, die über die Stirn 9 des männlichen Profils 1 ragt und so direkt und ohne jede Abschwächung im Falle einer Kollision den in der Kammer 8 vorgesehenen Sensor aktiviert. Derartige Sensoren werden oft erst nach erfolgtem Schließen der Türe aktiviert, da alleine schon die Erschütterungen am Ende der Schließbewegung, wenn die beiden Dichtungsprofile 1, 2 in Kontakt miteinander kommen, ausreichen würden, um den Sensor zu aktivieren.

Diese Kammer 8 ist nun erfindungsgemäß im mittleren Bereich der Stirn 9 ausgebildet und von dem Bereich aus, in dem sie sich über die Stirn 9 erhebt, ragt auch zumindest eine, im dargestellten Ausführungsbeispiel sind des zwei, Dichtlippen 10 aus der Stirn 9 hervor.

Der Winkel α, den die Dichtlippen bzw. deren Mittelebenen mit der Stirnfläche einschließen, beträgt gemäß einer bevorzugten Ausgestaltung der Erfindung zumindest 30°, bevorzugt etwa 45°. Die Dichtlippen 10 ragen jedenfalls aufgrund ihrer Wurzel nahe des mittleren Bereiches der Stirn 9 schräg nach außen und sie sind so lange, dass ihr größter Abstand von der Stirn 9 größer ist als der größte Abstand der Kammer 8 von der Stirn.

Wie aus einem Vergleich der Fig. 1 und der Fig. 2 hervorgeht, wird durch diese lange Ausbildung der Dichtlippen 10 in Verbindung mit der V-förmigen Ausbildung der Kontur der weiblichen Dichtung 2 erreicht, dass die Dichtlippen 10 so stark elastisch deformiert werden, dass sie mit ausreichender Kraft an der Kontur 11 des Gegenprofils anliegen um zu einer zuverlässigen Dichtung zu kommen. Wie aus Fig. 2 hervorgeht, wird dadurch auch erreicht, dass die Dichtlippen 10 über einen merklichen Abschnitt der Kontur 11 anliegen, sodass Verschmutzungen, Beschädigungen und Ungenauigkeiten am Profil 2 oder an den Dichtlippen die Dichtwirkung nicht merklich zu verringern imstande sind.

Wie aus der Fig. 2 weiters hervorgeht, besteht - im Querschnitt gesehen - das zwischen den beiden Dichtungen eingeschlossene Volumen im wesentlichen aus zwei Kammern 12, 13, die an der Stelle, an der die Sensorkammer 8 am weitesten über die Stirn 9 vorspringt, fast getrennt voneinander sind. Durch diese Maßnahme wirkt dieser Raum noch wie eine berührungsfreie Dichtung, nämlich mit zwei Kammern 12, 13 und einer dazwischen angeordneten Drossel.

Die Erfindung ist nicht auf das dargestellte Ausfiihrungsbeispiel beschränkt sondern kann auch verschiedentlich abgewandelt werden. So ist es insbesondere möglich, asymmetrische Ausbildungen zu wählen, die dann unter Umständen auch das Vorsehen zweier unterschiedlicher Profile überflüssig machen. Es wäre dann allerdings auf beiden Seiten eine ganz im Stirnbereich liegende Sensorkammer vorgesehen und jedes der beiden Profile würden eine Dichtlippe tragen. Schließlich ist es auch nicht notwendig, eine Sensorkammer 6 für starke Kollisionen vorzusehen, auch insgesamt ist es nur notwendig, zumindest eine Dichtlippe 10 anzuordnen, diese muss aber den genannten erfindungsgemäßen Bedingungen entsprechen.

Das Vorsehen weiterer Dichtlippen, Kammern oder Stege ist selbstverständlich möglich, wesentlich für die Erfindung ist nur, dass eine Kammer für einen Sensor im Stirnbereich einer der Dichtungen vorgesehen ist und dass eine Dichtlippe etwa aus dem Bereich schräg nach vorne und außen vorspringt, wo die Kammer in die Stirne mündet.

Die Türspaltabdichtung kann nicht nur für klassischen Einklemmschutz, sondern auch als sog. Restspaltüberwachung eingesetzt werden. Dies bedeutet, dass die Schaltleisten signaltechnisch erst nach der Verriegeltmeldung des Systems für einige Sekunden aktiv geschaltet wird, um erkennen zu können, ob ein Gegenstand eingklemmt worden ist.

## Patentansprüche

1. Dichtungsprofil, insbesondere für die Hauptschließkanten von Schiebetüren, Schwenkschiebetüren und Taschentüren von Fahrzeugen, insbesondere von Schienenfahrzeugen, mit mindestens einer Kammer für einen darin untergebrachten Deformacionssensor und zwei Dichtlippen, wobei im Querschnitt des Profils (1) zumindest die für den Sensor vorgesehene Kammer (8) mittig und vor dem Stirnbereich des Dichtungsprofils (1) liegt und wobei die zwei Dichtlippen (10) unmittelbar vom Stirnbereich selbst vorspringen, **dadurch gekennzeichnet, dass** die Dichtlippen (10) im mittleren Bereich der Stirn (9) nahe des Übergangs von der Stirn zur Sensorkammer (8) aber räumlich getrennt von der Sensorkammer neben der Sensorkammer ausgehen und schräg zur Stirn nach außen ragen und in Richtung normal zur Stirn über die Außenkontur der Sensorkammer (8) vorstehen.

2. Dichtungsprofil nach Anspruch 1, **dadurch gekennzeichnet, dass** das Profil (1) symmetrisch im Querschnitt aufgebaut ist.

3. Dichtungsprofil nach einem der Ansprüche 1 oder 2, **dadurch gekennzeichnet, dass** die Dichtlippen (10) zur Stirn einen Winkel von zumindest 30°, bevorzugt 45° aufweisen.

## Claims

1. A seal profile, in particular for the main closing edges of sliding doors, sliding plug doors and pocket doors of vehicles, in particular of rail vehicles, with at least one chamber for a deformation sensor accommodated therein and two sealing lips, with, in the cross-section of the profile (1), at least the chamber (8) provided for the sensor being located centrally and in front of the end-face region of the seal profile (1) and the two sealing lips (10) projecting directly from the end-face region itself, **characterised in that** the sealing lips (10), in the middle region of the end face (9), extend next to the sensor chamber close to the transition from the end face to the sensor chamber (8) but spatially separated from the sensor chamber and protrude outwards obliquely with respect to the end face and project across the outer contour of the sensor chamber (8) in the direction normal to the end face.

2. A seal profile according to Claim 1, **characterised in that** the profile (1) is constructed symmetrically in cross-section.

3. A seal profile according to one of Claims 1 or 2, **characterised in that** the sealing lips (10) have an angle of at least 30°, preferably 45°, to the end face.

## Revendications

1. Profilé d'étanchéité, notamment pour des bords de fermeture principaux de portes coulissantes, de portes louvoyantes coulissantes et de portes à poche de véhicules, notamment de véhicules ferroviaires, comprenant au moins une chambre pour un capteur de déformation, qui y est logé, et deux lèvres d'étanchéité, dans lequel, dans la section transversale du profilé (1), au moins la chambre (8) prévue pour le capteur se trouve au milieu et devant la région frontale du profilé (1) d'étanchéité et dans lequel les deux lèvres (10) d'étanchéité font saillie directement de la région frontale soi-même, **caractérisé en ce que** les lèvres (10) d'étanchéité partent, à côté de la chambre du capteur, dans la région médiane du front (9), près de la transition du front à la chambre (8) du capteur, mais en étant séparées dans l'espace de la chambre du capteur et font saillie vers l'extérieur en étant inclinées par rapport au front et dépassent, dans la direction normale au front, du contour extérieur de la chambre (8) du capteur.

2. Profilé d'étanchéité suivant la revendication 1, **caractérisé en ce que** le profilé (1) est symétrique en section transversale.

3. Profilé d'étanchéité suivant l'une des revendications 1 ou 2, **caractérisé en ce que** les lèvres (10) d'étanchéité font un angle avec le front d'au moins 30°, de préférence de 45°.
